# EUROPEAN PATENT SPECIFICATION

(11) **EP 3 073 838 B1**
(45) Date of publication and mention of the grant of the patent: **26.08.2020**
(21) Application number: 14865952.7
(22) Date of filing: 01.12.2014
(51) Int. Cl.: A23G 9/00, A23G 9/04, A23G 9/24, A23G 9/48

(54) **FROZEN/CHILLED DESSERT AND METHOD AND APPARATUS FOR MANUFACTURING SAME**
GEFRORENE/GEKÜHLTE NACHSPEISE UND VERFAHREN UND VORRICHTUNG ZUR HERSTELLUNG DAVON
DESSERT SURGELÉ/GLACÉ ET PROCÉDÉ ET APPAREIL POUR SA FABRICATION

(30) Priority: 29.11.2013 JP 2013248145
(43) Date of publication of application: 05.10.2016
(73) Proprietor: General Mills, Inc., Minneapolis, Minnesota 55440 (US)
(72) Inventor: IMAI, Hironobu, Tokyo 107-0051 (JP); WATANABE, Mari, Tokyo 107-0051 (JP); SATO, Hanako, Tokyo 107-0051 (JP); HIRAMATSU, Masaru, Yokohama-shi Kanagawa 241-0023 (JP); SEKINE, Kazuhiko, Yokohama-shi Kanagawa 241-0023 (JP); SAGAWA, Masashi, Yokohama-shi Kanagawa 241-0023 (JP); SHINOZAKI, Akira, Yokohama-shi Kanagawa 241-0023 (JP); ARATANI, Jun, Yokohama-shi Kanagawa 241-0023 (JP); MATSUDA, Hajime, Yokohama-shi Kanagawa 241-0023 (JP)
(74) Representative: Vossius & Partner Patentanwälte Rechtsanwälte mbB
(86) International application number: PCT/JP2014/082346
(87) International publication number: WO 2015/080300

(56) References cited:
- WO-A1-02/052944
- JP-A- H 044 846
- JP-A- H 044 846
- JP-A- H11 225 679
- JP-A- H11 346 659
- JP-A- 2013 153 732
- JP-A- 2013 153 732
- JP-U- 3 121 400
- JP-U- S4 888 395
- JP-U- S63 138 088
- US-A- 1 987 084
- US-A- 1 991 617
- US-A- 2 167 353
- US-A- 2 486 194
- US-A- 2 515 952
- US-A- 2 674 960
- US-A- 4 190 676

## Description

### [Technical field]

The present invention pertains to a frozen/chilled dessert and method and apparatus for manufacturing same, in which a shaded pattern is formed using a zol-state substance on the surface of a frozen/chilled dessert base material such as ice cream.

### [Background art]

In frozen/chilled desserts, the addition of decoration, i.e. patterns or three dimensional shapes, to the surface of a frozen/chilled dessert base material such as ice cream increases their appeal, and flavors or textures can also be imparted by materials used to form [such] patterns, so there is a high demand for [such decorations], and patterns or three dimensional shapes are formed by various methods. Here, zol-state substance refers to an intermediate body with fluidity, i.e., in a sauce state, between liquid and solid.

A decorated food has been proposed (see, for example, Patent Document 1) whereby, as a conventional decorated food made from a fluid food material such as ice cream serving as a frozen/chilled dessert base material, and taking the form of a decorated food made of two or more fluid food materials of differing colors, the outer shape of said form is matched to the inside surface shape of an indentation in a mold, and a fluid ingredient of the fluid food material of one color inside the indentation is discharged as a base from a nozzle, and at the top layer of the base, a fluid food ingredient consisting of one or more colors of a fluid food material of a color different from the base color is discharged from a nozzle different from the nozzle above into indentation[s] in the mold and rotated to form a swirl pattern.

In a conventional method for manufacturing decorated ice cream products, sauce is dripped from a nozzle onto the surface of an ice cream layer, and a linear object, the tip of which is thrust into the top layer portion of the ice cream, is moved so as to traverse the sauce dropped thereon in small circles (e.g., see Patent Document 2).

As a method for manufacturing conventional frozen/chilled desserts combining multiple frozen/chilled dessert materials, a combined frozen/chilled dessert manufacturing method has been proposed (e.g., see Patent Document 3) in which an indented portion is formed in which the inside surface is quick-frozen and hardened and a frozen/chilled dessert material of a different type from that of the outer layer is filled into said indentation by combining a step in which frozen/chilled dessert material serving as an outer layer is filled into a mold and an indented portion is then formed in the frozen/chilled dessert material to serve as said outer layer by pressing with a press mold, with a step for hardening the surface of the frozen/chilled dessert material to serve as outer layer using a quick-freezing means.

As a conventional frozen/chilled dessert to which three dimensional decoration is applied, a patterned frozen/chilled dessert product has been proposed in which ice cream is extruded from a nozzle having a plant or animal shape through a cream blocking and dispersing plate and a mesh plate onto the surface of a predetermined amount of popsicle filled into a container, then cut to a specified thickness to form a shape evoking a plant or animal, and an oleaginous food is further pressed out from a temperature controlled filling nozzle onto the surface of the formed ice cream to form a three dimensional pattern (e.g., see Patent Document 4).

Patent Document 5 discloses ice-cream sundaes and particularly an improved sundae that may be stored indefinitely at low temperatures after being made by adding a syrup or other topping to partially congealed ice cream mix.

Patent Document 6 discloses a method of producing frozen comestibles, such as ice cream.

Patent Document 7 discloses a method for producing an assorted frozen sweet providing a distinct boundary between frozen sweet layers without mutual mixing of the respective frozen sweet layers by continuously and stably filling plural layers into a desired shape.

Patent Document 8 discloses a confection and a method of making the same.

Patent Document 9 discloses a decorative food having a spiral pattern of uniform quality, excellent in texture, taste and palatability and suitable for chocolate.

Patent Document 10 discloses a frozen confectionery which has good palate feeling and is readily available to consumers.

### [Citation List]

### [Patent Literature]

**Patent Document 1: Japanese Patent** 3808207
**Patent Document 2: Japanese Patent** 3654511
**Patent Document 3: Japanese Patent** 3447548
**Patent Document 4: Japanese Utility Model Registration** 3121400
**Patent Document 5:** US 2 486 194 A
**Patent Document 6:** US 2 674 960 A
**Patent Document 7:** JP H 11 225 679 A
**Patent Document 8:** US 2 167 353 A
**Patent Document 9:** JP H 11 346 659 A
**Patent Document 10:** JP 2013 153 732 A

### [Summary of Invention]

### [Technical Problem]

For decorated foods such as ice cream products etc. proposed by Patent Document 1, a fluid food material such as ice cream of two or more colors is poured into a mold indentation and the mold is rotated to form a swirl pattern or the like. Therefore for the decorated foods of Patent Document 1, multiple fluid food products are present in a swirl shape down to a predetermined depth, and a uniform taste is obtained not only on the surface but down into the interior. However, the surface visible to the consumer is a patterned flat surface, and is ordinary and without appeal.

In the ice cream manufactured according to the method proposed in Patent Document 2, the steps by which a sauce is directly dripped in small circular shapes onto the surface of an ice cream layer and a rigid linear object is plunged into the interior of the ice cream layer must be performed before the ice cream layer hardens. In such cases, a risk occurs that movement of the linear object will cause the ice cream material to be partially exposed between sauce layers, or ice cream layers to be peeled away, such that the pattern created by the sauce is deformed and distorted, making it unsightly. Even if a regular and beautiful pattern is formed, that pattern is a flat pattern on the surface of the ice cream layer, with a limited ability to increase aesthetic appeal.

Moreover, in frozen/chilled desserts such as ice cream manufactured by the method proposed in Patent Document 2, the surface of the decorated product visible to the consumer has a flat pattern, and is ordinary and without appeal.

In the combination frozen/chilled dessert manufactured by the method proposed in Patent Document 3, the outside frozen/chilled dessert material surface forming the outer layer is hardened by a quick-freezing means, then the inside frozen/chilled dessert material is filled into the outer layer, therefore the first frozen/chilled dessert material and second frozen/chilled dessert material can be prevented from mixing together and degrading the external appearance.

However, in the surface of a frozen/chilled dessert according to Patent Document 3, the first frozen/chilled dessert material and second frozen/chilled dessert material are a flat pattern, or the second frozen/chilled dessert material is slightly more projected than the first frozen/chilled dessert material and substantially a flat pattern, which is ordinary and without appeal.

In the patterned frozen/chilled dessert product formed in a three dimensional manner as proposed in Patent Document 4, a three dimensional pattern is formed using ice cream or the like on top of a popsicle, and a three dimensional pattern of chocolate sauce is further formed on top of said three dimensional pattern, thus forming an overall three dimensional pattern. The three dimensionally patterned frozen/chilled dessert product according to Patent Document 4 has an appeal different from other [desserts] due to its three dimensionality, but is building block-like in appearance, and unappealing due to lack of depth and visual composure.

Furthermore, in the three dimensionally formed patterned frozen/chilled dessert product proposed in Patent Document 4, the ice creams and chocolate sauce etc. forming multiple layers are supplied independently for each respective layer on the popsicle, raising the problem of extremely low production efficiency.

### (Object of the Invention)

The present invention was undertaken in light of the above-described problems pertaining to conventional frozen/chilled dessert products such as ice cream products and their manufacture, and has the object of providing a frozen/chilled dessert product and manufacturing method and apparatus for same whereby a three dimensional pattern is formed on the surface of a frozen/chilled dessert base material such as ice cream and a zol-state substance such as a semitransparent sauce material is supplied thereupon, so that a shaded pattern is formed by the zol-state substance such as the semitransparent sauce material or the like formed thereon, providing rich aesthetic appeal and diversity of flavor and texture.

In light of the high risk of deformation or degradation of the raised and indented parts of a popsicle caused by friction or temperature changes, the present invention also has the object of providing a frozen/chilled dessert product and manufacturing method and apparatus for same capable of solving these problems by flattening the surface.

### [Solution of Problem]

Claim 1 describes:
a frozen/chilled dessert comprising within a cup a frozen/chilled dessert base material layer, on the top surface of which a raised and indented pattern is disposed, and a zol-state substance layer with a flat surface covering the raised and indented pattern in said frozen/chilled dessert base material layer, wherein said zol-state substance is a sauce.

Claim 5 describes:
a manufacturing method comprising: a cup supplying step for supplying cups;
a frozen/chilled dessert base material filling step for filling frozen/chilled dessert base material into the supplied cups;
a raised and indented pattern forming step for forming a raised and indented pattern on the frozen/chilled dessert base material;
a zol-state substance filling step for pouring zol-state substance onto frozen/chilled dessert base material in which a raised and indented pattern is formed;
and furthermore a first chilling step for supplying a chilling medium onto the zol-state substance layer and chilling the frozen/chilled dessert base material and zol-state substance; wherein said zol-state substance is a sauce.

Claim 9 describes:
a frozen/chilled dessert manufacturing apparatus comprising: a cup portion for supplying cups;
a frozen/chilled dessert base material filling portion for filling frozen/chilled dessert base material into the supplied cup;
a raised and indented pattern forming portion for forming a raised and indented pattern on the frozen/chilled dessert base material;
a zol-state substance filling portion for pouring zol-state substance onto the frozen/chilled dessert base material in which a raised and indented pattern is formed;
and furthermore a first chilling portion for supplying a chilling medium onto the zol-state substance and chilling the frozen/chilled dessert base material and zol-state substance ; wherein said zol-state substance is a sauce.

### [Advantageous Effects of Invention]

The present invention enables the constitution of a frozen/chilled dessert and manufacturing method and apparatus for same capable of high aesthetic appeal and diverse flavors and textures by forming a three dimensional pattern in the surface of a frozen/chilled dessert base material such as ice cream, and a shaded pattern formed thereon using a zol-state substance such as semitransparent sauce material or the like.

In addition, the present invention enables the provision of a frozen/chilled dessert product and manufacturing method and apparatus for same capable of solving the problem of the high risk of deformation or degradation of the raised and indented parts of a popsicle caused by friction or by temperature changes by flatenning the surface.

### [Brief Description of Drawings]

Fig. 1: An explanatory configuration diagram of a frozen/chilled dessert manufacturing apparatus according to a first embodiment of the invention.
Fig. 2: A perspective view of the Fig. 1 frozen/chilled dessert manufacturing apparatus cup body supply portion.
Fig. 3: A perspective view of the Fig. 1 frozen/chilled dessert manufacturing apparatus first blower portion.
Fig. 4: A perspective view of the Fig. 1 frozen/chilled dessert manufacturing apparatus ice cream base material supply portion.
Fig. 5: A perspective view of the Fig. 1 frozen/chilled dessert manufacturing apparatus cold plate.
Fig. 6: A perspective view of the Fig. 1 frozen/chilled dessert manufacturing apparatus patterned downward-facing disk portion.
Fig. 7: A perspective view of the Fig. 1 frozen/chilled dessert manufacturing apparatus patterning portion.
Fig. 8: A perspective view of the Fig. 1 frozen/chilled dessert manufacturing apparatus second blower portion.
Fig. 9: A perspective view of the Fig. 1 frozen/chilled dessert manufacturing apparatus zol-state substance supply portion.
Fig. 10: A plan view of a frozen/chilled dessert product manufactured by the Fig. 1 frozen/chilled dessert manufacturing apparatus, with the cap and sheet seal removed.
Fig. 11: A perspective view of the patterned downward-facing disk portion of the frozen/chilled dessert manufacturing apparatus according to a second embodiment of the invention.
Fig. 12: A plan view of a frozen/chilled dessert product manufactured by a frozen/chilled dessert manufacturing apparatus according to a second embodiment of the invention, with the cap and sheet seal removed.

### [Description of Embodiments]

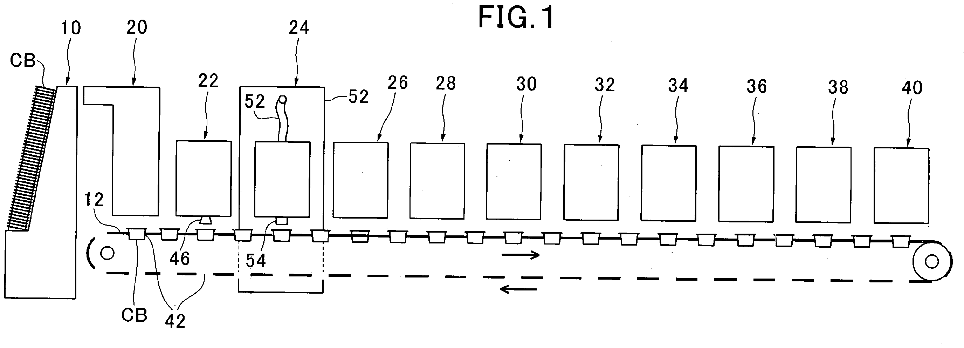

Below, based on diagrams, we explain an embodiment of the frozen/chilled dessert and manufacturing method and apparatus for same of the present invention. As shown in the Fig. 1 explanatory structural diagram, an ice cream manufacturing apparatus according to an embodiment of the invention has a cup body stock portion 10 for holding cup body portions CB for resin ice cream cups stacked at an angle, and a transport belt 12, disposed adjacently so as to sequentially receive cup body portions CB from cup body stock portion 10, for holding and intermittently transporting cup body portions CB.

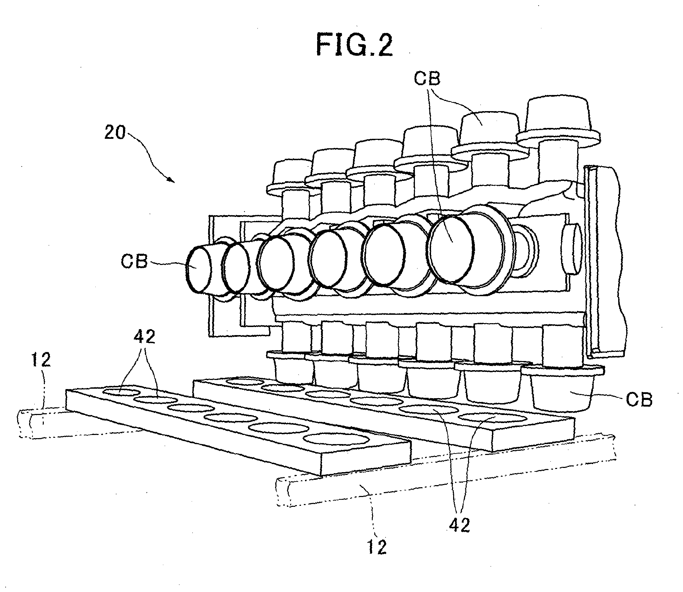

As shown in Fig. 1, the following are engaged with and disposed on transport belt 12, in order starting from the upstream side: cup body supply portion 20, first blower 22, ice cream base material supply portion 24, cold plate portion 26, patterning portion 28, chilling portion 30, zol state substance supply portion 34, sheet seal portion 36, cup cap seal portion 38, and packaging portion 40. Transport belt 12 has six rows of cup body portion receiving holes 42 (Fig. 2) extending in the direction of transport.

As shown in Fig. 2, cup body supply portion 20 suctions and receives six cup body portions CB at a time from cup body stock portion 10 and supplies [these] to cup body portion receiving holes 42.

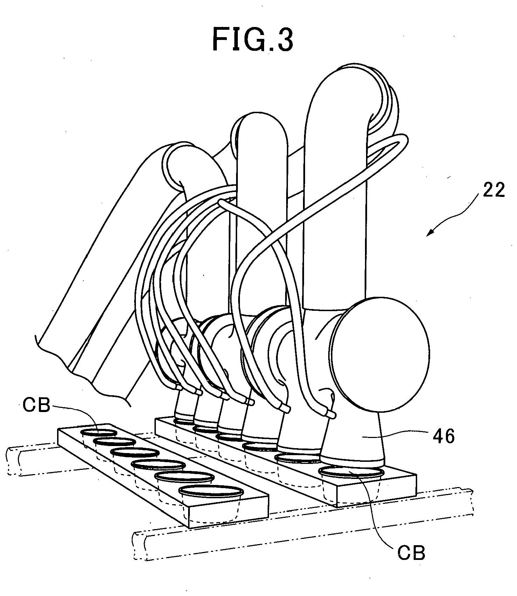

As shown in Fig. 3, first blower 22 jets compressed air from a jet nozzle (not shown) disposed at the center of suctioning member 46 toward cup body portions CB, transported by transport belt 12; at the same time, dust etc. inside cup body portions CB is sent to a dust collector (not shown) together with the air using suctioning member 46.

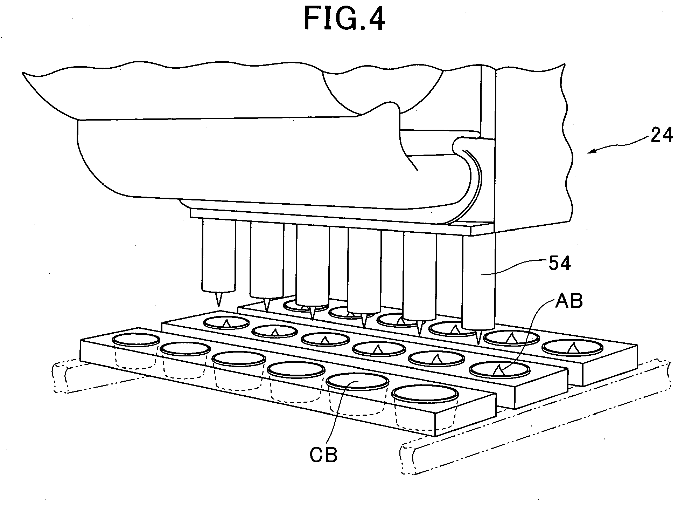

As shown in Figs. 1 and 4, ice cream base material supply portion 24 operates to supply ice cream base material AB from ice cream base material tank 50 through a distribution pipe 52 into cup body portions CB as they are being transported. Ice cream base material supply portion 24 supplies and fills a predetermined amount of ice cream base material into cup body portions CB through ice cream base material nozzle 54.

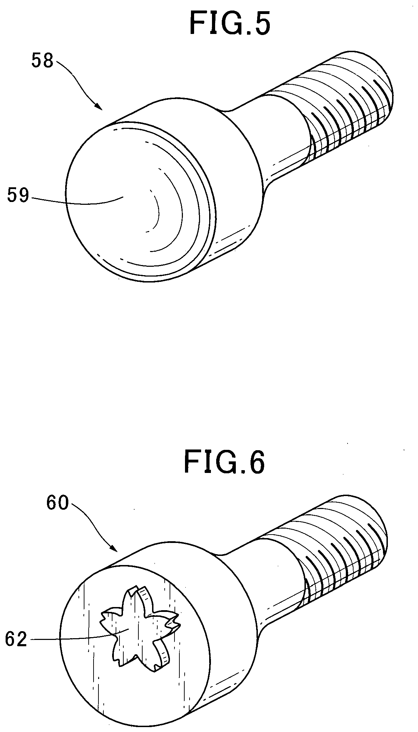

Cold plate portion 26 has a downward-facing disk portion 58 with a diameter which is smaller by a few millimeters than the inside diameter of the upper part of top-wide cup body portions CB. Downward-facing disk portion 58 is cooled with liquid nitrogen. As shown in Fig. 5, the downward-facing face 59 of downward-facing disk portion 58 is a projecting spherical surface with [respective] radii of approximately 30 mm, approximately 60 mm, and appropriate 120 mm, etc. Downward-facing disk portion 58 causes the top surface of the ice cream base materials AB filled into predetermined cup body portions CB to form a convex spherical surface while at the same time chilling and hardening same.

Patterning portion 28 presses the patterned downward-facing disk portion 60 explained below into the top surface of ice cream base material AB to form a concave pattern 61. Patterning portion 28, in the same way as cold plate portion 26, has a patterned downward-facing disk portion 60 with a diameter a few mm smaller than the inside diameter of the upper part of top-wide cup body portions CB. As shown in Fig. 6, a cherry flower shape is formed in convex pattern mold portion 62 on patterned downward-facing disk portion 60. The outside diameter of patterned downward-facing disk portion 60 is, for example, 65 mm, and the height of convex pattern mold portion 62 is 5 mm in one example, and preferably 3 to 5 mm. It is preferable for the top end perimeter of convex pattern mold portion 62 to be beveled or tapered.

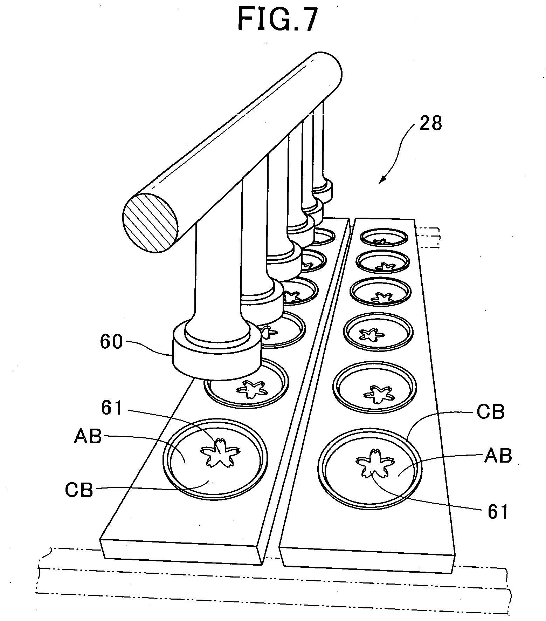

In patterning portion 28, as shown in Fig. 7, a concave pattern 61 is formed in the top surface of ice cream base material AB by patterned downward-facing disk portion 60, which has a convex pattern mold portion 62.

Chilling portion 30 injects liquid nitrogen into cup body portions CB, causing ice cream base material filled into cup body portions CB to cool and harden.

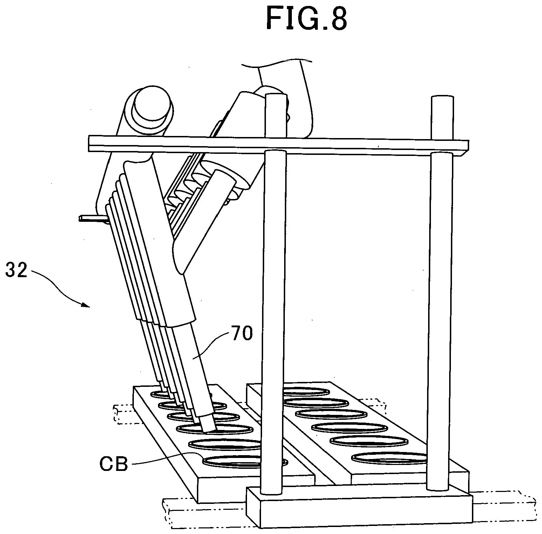

As shown in Fig. 8, second blower 32 jets compressed air from jet nozzle 70 into cup body portions CB holding cooled and hardened ice cream base material AB so as to blow away foreign objects within cup body portions CB.

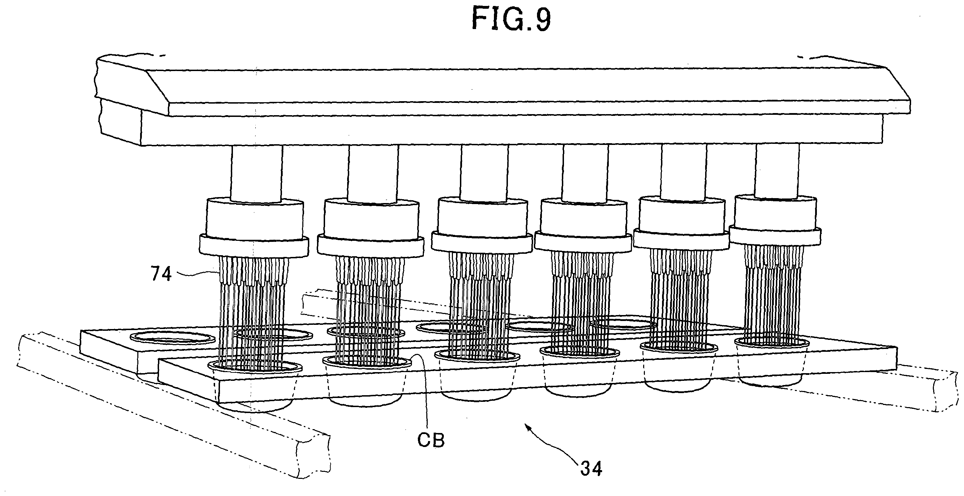

Zol state substance supply portion 34, as shown in Fig. 9, supplies a zol-state substance to each cup body portion CB from multiple ice cream material supply nozzles 74 onto the surface of the hardened ice cream base material AB. The density and hardness of the zol-state substance is at a level such that the surface of the zol-state substance supplied to the top surface of the ice cream base material AB having a pattern concave portion 61 becomes flat in a few seconds. I.e., the brix value of the zol-state substance is measured by an Atago-manufactured sugar content meter [refractometer] PR-201 or the like to be preferably 1-60°, and more preferably 30-60°. The viscosity of the zol-state substance is measured by a rotary viscometer such as the Tokyo Keiki BM Viscometer, and is 1000-3500 cP. The pH value of the zol-state substance is measured by a Horiba D-12 pH meter or the like, and is between 3.0 and 7.0. If the zol-state substance is acidic, its pH is between 3.0 and 4.0.

Zol-state substances can be divided into those manufactured with at least polysaccharide thickeners or gelatins added, and those manufactured without either polysaccharide thickeners or gelatins added.

Those manufactured with at least polysaccharide thickeners or gelatins added are artificial fruit juice sauces into which pigments, sugars, organic acids, and the like are blended for manufacture. Such sauces are exemplified by those with honey added, sauces with plant extracts including those extracted from plants such as coffee, tea, cherry, and herbs, fruit-containing sauces such as those with fruit, fruit juice, fruit skins, cherries, and green tea, and processed plant extract-containing sauces such as those with brown sugar syrup, maple syrup, and the like.

Examples of items manufactured without adding either polysaccharide thickeners or gelatins include fruit sauces in which the plant itself is processed to make a fruit sauce, brown sugar sauce or maple syrup with processed plant extracts, caramel sauce with burnt sugar, or honey.

Zol-state substances are transparent or semi-transparent, and are colored or uncolored. I.e., the transparency of zol-state substances when measured by a ZE-2000 color meter manufactured by Nippon Denshoku Industries [shows] a Y value of 0.00 to 100.00, and preferably from 0.01 to 91.00. Zol-state substances are sauces, specifically fruit sauces such as cherry sauce, rose cherry sauce, raspberry sauce, orange sauce, strawberry sauce, etc., as well as green tea sauce and brown sugar sauce.

Decorative materials such as gold powder or the like may be blended uniformly or non-uniformly into a zol-state substance.

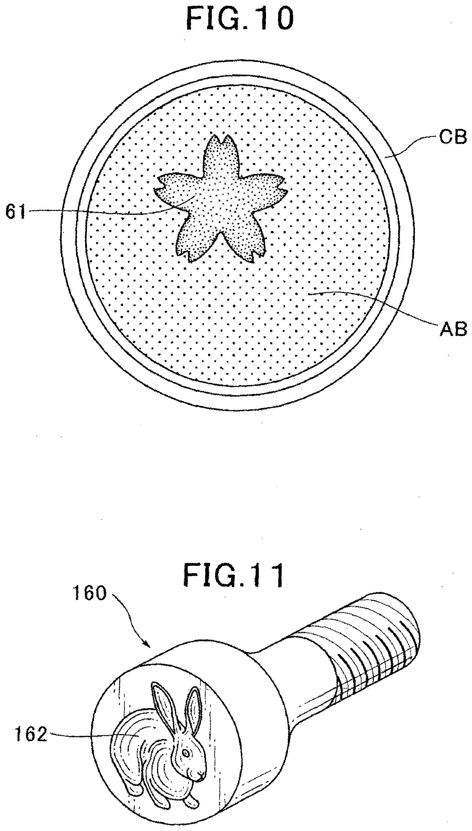

When a zol-state substance is supplied onto the surface of an ice cream base material AB formed into a concave pattern 61, the surface of the zol-state substance is horizontally flattened. As a result, the zol-state substance is made thicker in the deep parts of concave pattern 61 and thinner in the shallow parts of concave pattern 61. As shown in Fig. 10, frozen/chilled dessert products manufactured in this manner have a dark colored pattern at approximately the center due to changes in the amount of transmitted light in the zol-state substance, i.e. the apparent shading or intermediate shading of the zol-state substance, and a surrounding pattern with pale portions caused by the zol-state substance can be observed.

Sheet seal portion 36 is comprised to [provide a] sheet seal on cup body portions CB by cutting out seals from a seal sheet on which multiple seals are printed and thermally bonding them to cup body portions CB.

Cup cap seal portion 38 is constituted so as to cover the cup cap on the cup body portions CB sealed by the sheet seal.

Packaging portion 40 is sheet-sealed, and is constituted to enclose in a box the cup body portions CB covered with a cup cap, i.e., the ice cream product.

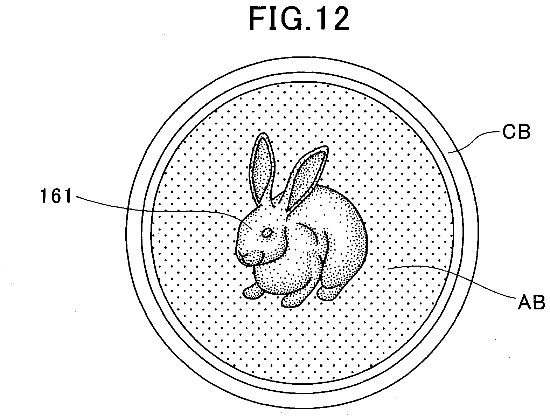

In another embodiment of a pattern mold portion 62 on downward-facing disk portion 60, as shown in Fig. 11, a pattern mold portion 162 is formed, in which the subject rabbit image is concavely formed. In this case, as shown in Fig. 12, a convex pattern mold portion 161 is formed on the top surface of ice cream base material AB, which has passed through patterning portion 28, by downward-facing disk portion 160 having a concave pattern mold portion 162. Frozen/chilled dessert products manufactured in this manner have a pale colored pattern at approximately the center due to changes in the amount of transmitted light in the zol-state substance, i.e. the apparent shading or intermediate shading of the zol-state substance, and a surrounding pattern with dark portions caused by the zol-state substance can be observed.

### [Reference Signs List]

- AB:: ice cream base material
- CB:: cup body portions
- 10:: cup body stock portion
- 12:: transport belt
- 20:: cup body supply portion
- 22:: first blower
- 24:: ice cream base material supply portion
- 26:: cold plate portion
- 28:: patterning portion
- 30:: chilling portion
- 32:: second blower
- 34:: zol state substance supply portion
- 36:: sheet seal portion
- 38:: cup cap seal portion
- 40:: packaging portion
- 42:: cup body portion receiving holes
- 46:: suctioning member
- 50:: ice cream base material tank
- 52:: distribution pipe
- 58:: downward-facing disk portion
- 59:: downward-facing surface
- 60:: patterned downward-facing disk portion
- 61:: concave pattern
- 62:: pattern mold portion

In the following, embodiments of the present application are summarized:
[Item 1] A frozen/chilled dessert comprising within a cup a frozen/chilled dessert base material layer, on the top surface of which a raised and indented pattern is disposed, and a zol-state substance layer with a flat surface covering the raised and indented pattern in said frozen/chilled dessert base material layer, wherein said zol-state substance is a sauce.
[Item 2] The frozen/chilled dessert of Item 1, wherein the frozen/chilled dessert base material is ice cream, popsicle, lacto-ice, or ice milk.
[Item 3] The frozen/chilled dessert of Item 1, wherein the zol-state substance is manufactured by adding at least one of either polysaccharide thickener or gelatin.
[Item 4] The frozen/chilled dessert of Item 1, wherein the zol-state substance is manufactured without adding either polysaccharide thickener or gelatin.
[Item 5] A frozen/chilled dessert manufacturing method comprising:
   a cup supply step for supplying cups;
   a frozen/chilled dessert base material filling step for filling frozen/chilled dessert base material into the supplied cups;
   a raised and indented pattern forming step for forming a raised and indented pattern on the frozen/chilled dessert base material;
   a zol-state substance filling step for pouring zol-state substance onto frozen/chilled dessert base material in which a raised and indented pattern is formed;
   and furthermore a first cooling step for supplying a cooling medium onto the zol-state substance layer and cooling the frozen/chilled dessert base material and zol-state substance; wherein said zol-state substance is a sauce.
[Item 6] The frozen/chilled dessert manufacturing method of Item 5, comprising a flattening step between the frozen/chilled dessert base material filling step and the raised and indented pattern forming step, for flattening the surface of the frozen/chilled dessert base material.
[Item 7] The frozen/chilled dessert manufacturing method of Item 5, comprising a second cooling step for cooling and hardening the surface of the frozen/chilled dessert base material layer before the zol-state substance supply step.
[Item 8] The frozen/chilled dessert manufacturing method of Item 7, whereby the second cooling step causes the cooling member to contact the frozen/chilled dessert base material layer surface.
[Item 9] A frozen/chilled dessert manufacturing apparatus comprising:
   a cup supply portion (20) for supplying cups (CB);
   a frozen/chilled dessert base material filling portion (24) for filling frozen/chilled dessert base material (AB) into the supplied cups (CB);
   a raised and indented pattern forming portion (26, 28) for forming a raised and indented pattern on the frozen/chilled dessert base material;
   a zol-state substance filling portion (34) for pouring zol-state substance onto frozen/chilled dessert base material in which a raised and indented pattern is formed;
   and furthermore a first cooling portion for supplying a cooling medium onto the zol-state substance layer and cooling the frozen/chilled dessert base material and zol-state substance; wherein said zol-state substance is a sauce.
[Item 10] The frozen/chilled dessert manufacturing apparatus of Item 9, wherein a flattening member for flattening the surface of the frozen/chilled dessert base material surface is disposed between the frozen/chilled dessert base material filling portion and the raised and indented pattern forming portion.
[Item 11] The frozen/chilled dessert manufacturing apparatus of Item 9, further provided with a second cooling portion for cooling and hardening the frozen/chilled dessert base material layer surface.
[Item 12] The frozen/chilled dessert manufacturing apparatus of Item 9, comprising a cooling member for causing the second cooling portion to contact the frozen/chilled dessert base material layer surface.
[Item 13] The frozen/chilled dessert manufacturing apparatus of Item 9, wherein the raised and indented pattern forming portion comprises a push mold to which a Nifgrip treatment has been applied.
[Item 14] The frozen/chilled dessert manufacturing apparatus of Item 9, wherein the raised and indented pattern forming portion comprises a push mold cooled with liquid nitrogen.
[Item 15] The frozen/chilled dessert manufacturing apparatus of Item 9, wherein the raised and indented pattern forming portion comprises a push mold, the corners of which have been rounded at the leading edge on projecting portions.

## Claims

1. A frozen/chilled dessert comprising within a cup a frozen/chilled dessert base material layer, on the top surface of which a raised and indented pattern is disposed, and a zol-state substance layer with a flat surface covering the raised and indented pattern in said frozen/chilled dessert base material layer, wherein said zol-state substance is a sauce.

2. The frozen/chilled dessert of Claim 1, wherein the frozen/chilled dessert base material is ice cream, popsicle, lacto-ice, or ice milk.

3. The frozen/chilled dessert of Claim 1, wherein the zol-state substance is manufactured by adding at least one of either polysaccharide thickener or gelatin.

4. The frozen/chilled dessert of Claim 1, wherein the zol-state substance is manufactured without adding either polysaccharide thickener or gelatin.

5. A frozen/chilled dessert manufacturing method comprising:
a cup supply step for supplying cups;
a frozen/chilled dessert base material filling step for filling frozen/chilled dessert base material into the supplied cups;
a raised and indented pattern forming step for forming a raised and indented pattern on the frozen/chilled dessert base material;
a zol-state substance filling step for pouring zol-state substance onto frozen/chilled dessert base material in which a raised and indented pattern is formed;
and furthermore a first cooling step for supplying a cooling medium onto the zol-state substance layer and cooling the frozen/chilled dessert base material and zol-state substance; wherein said zol-state substance is a sauce.

6. The frozen/chilled dessert manufacturing method of Claim 5, comprising a flattening step between the frozen/chilled dessert base material filling step and the raised and indented pattern forming step, for flattening the surface of the frozen/chilled dessert base material.

7. The frozen/chilled dessert manufacturing method of Claim 5, comprising a second cooling step for cooling and hardening the surface of the frozen/chilled dessert base material layer before the zol-state substance supply step.

8. The frozen/chilled dessert manufacturing method of Claim 7, whereby the second cooling step causes the cooling member to contact the frozen/chilled dessert base material layer surface.

9. A frozen/chilled dessert manufacturing apparatus comprising:
a cup supply portion (20) for supplying cups (CB);
a frozen/chilled dessert base material filling portion (24) for filling frozen/chilled dessert base material (AB) into the supplied cups (CB);
a raised and indented pattern forming portion (26, 28) for forming a raised and indented pattern on the frozen/chilled dessert base material;
a zol-state substance filling portion (34) for pouring zol-state substance onto frozen/chilled dessert base material in which a raised and indented pattern is formed;
and furthermore a first cooling portion for supplying a cooling medium onto the zol-state substance layer and cooling the frozen/chilled dessert base material and zol-state substance; wherein said zol-state substance is a sauce.

10. The frozen/chilled dessert manufacturing apparatus of Claim 9, wherein a flattening member for flattening the surface of the frozen/chilled dessert base material surface is disposed between the frozen/chilled dessert base material filling portion and the raised and indented pattern forming portion.

11. The frozen/chilled dessert manufacturing apparatus of Claim 9, further provided with a second cooling portion for cooling and hardening the frozen/chilled dessert base material layer surface.

12. The frozen/chilled dessert manufacturing apparatus of Claim 9, comprising a cooling member for causing the second cooling portion to contact the frozen/chilled dessert base material layer surface.

## Patentansprüche

1. Eine gefrorene/gekühlte Nachspeise, umfassend, in einem Becher, eine gefrorene/gekühlte Nachspeisengrundmaterialschicht, auf deren Oberfläche ein erhabenes und vertieftes Muster angebracht ist, und eine Zol-Status-Materialschicht mit einer flachen Oberfläche, die das erhabene und vertiefte Muster in der gefrorenen/gekühlten Nachspeisengrundmaterialschicht bedeckt, wobei das Zol-Status-Material eine Sauce ist.

2. Die gefrorene/gekühlte Nachspeise nach Anspruch 1, wobei das gefrorene/gekühlte Nachspeisengrundmaterial Eiscreme, Eis am Stiel, Lacto-Eis oder Eismilch ist.

3. Die gefrorene/gekühlte Nachspeise nach Anspruch 1, wobei das Zol-Status-Material durch Zugabe mindestens eines von entweder Polysaccharid-Verdickungsmittel oder Gelatine hergestellt wird.

4. Die gefrorene/gekühlte Nachspeise nach Anspruch 1, wobei das Zol-Status-Material ohne Zugabe von entweder Polysaccharid-Verdickungsmittel oder Gelatine hergestellt wird.

5. Ein Herstellungsverfahren für eine gefrorene/gekühlte Nachspeise, umfassend:
einen Becher-Zuführschritt zum Bereitstellen von Bechern
einen Füllschritt für gefrorenes/gekühltes Nachspeisengrundmaterial zum Füllen des gefrorenen/gekühlten Nachspeisengrundmaterials in die bereitgestellten Becher;
einen Bildungsschritt für ein erhabenes und vertieftes Muster zum Bilden eines erhabenen und vertieften Musters auf dem gefrorenen/gekühlten Nachspeisengrundmaterial;
einen Füllschritt für Zol-Status-Material zum Gießen von Zol-Status-Material auf das gefrorene/gekühlte Nachspeisengrundmaterial, in welchem ein erhabenes und vertieftes Muster gebildet wird;
und ferner einen ersten Kühlschritt zum Zuführen eines Kühlmediums auf die Zol-Status-Materialschicht und zum Kühlen des gefrorenen/gekühlten Nachspeisengrundmaterials und Zol-Status-Materials, wobei das Zol-Status-Material eine Sauce ist.

6. Das Herstellungsverfahren für eine gefrorene/gekühlte Nachspeise nach Anspruch 5, umfassend einen Abflachungsschritt zwischen dem Füllschritt für gefrorenes/gekühltes Nachspeisengrundmaterial und dem Bildungsschritt für ein erhabenes und vertieftes Muster zum Abflachen der Oberfläche des gefrorenen/gekühlten Nachspeisengrundmaterials.

7. Das Herstellungsverfahren für eine gefrorene/gekühlte Nachspeise nach Anspruch 5, umfassend einen zweiten Kühlschritt zum Kühlen und Härten der Oberfläche der gefrorenen/gekühlten Nachspeisengrundmaterialschicht vor dem Zol-Status-Material-Zuführschritt.

8. Das Herstellungsverfahren für eine gefrorene/gekühlte Nachspeise nach Anspruch 7, wobei der zweite Kühlschritt bewirkt, dass der Kühlkörper die Oberfläche der gefrorenen/gekühlten Nachspeisengrundmaterialschicht kontaktiert.

9. Eine Vorrichtung zur Herstellung einer gefrorenen/gekühlten Nachspeise, umfassend:
einen Becher-Zuführabschnitt (20) zum Bereitstellen von Bechern (CB);
einen Füllabschnitt (24) für gefrorenes/gekühltes Nachspeisengrundmaterial zum Füllen des gefrorenen/gekühlten Nachspeisengrundmaterials (AB) in die bereitgestellten Becher (CB);
einen Bildungsabschnitt (26, 28) für ein erhabenes und vertieftes Muster zum Bilden eines erhabenen und vertieften Musters auf dem gefrorenen/gekühlten Nachspeisengrundmaterial;
einen Füllabschnitt (34) für Zol-Status-Material zum Gießen von Zol-Status-Material auf das gefrorene/gekühlte Nachspeisengrundmaterial, in welchem ein erhabenes und vertieftes Muster gebildet wird;
und ferner einen ersten Kühlabschnitt zum Zuführen eines Kühlmediums auf die Zol-Status-Materialschicht und zum Kühlen des gefrorenen/gekühlten Nachspeisengrundmaterials und Zol-Status-Materials, wobei das Zol-Status-Material eine Sauce ist.

10. Die Vorrichtung zur Herstellung einer gefrorenen/gekühlten Nachspeise nach Anspruch 9, wobei ein Abflachungselement zum Abflachen der Oberfläche des gefrorenen/gekühlten Nachspeisengrundmaterials zwischen dem Abfüllabschnitt für das gefrorene/gekühlte Nachspeisengrundmaterial und dem Bildungsabschnitt für ein erhabenes und vertieftes Muster angeordnet ist.

11. Die Vorrichtung zur Herstellung einer gefrorenen/gekühlten Nachspeise nach Anspruch 9, die ferner mit einem zweiten Kühlabschnitt zum Kühlen und Härten der Oberfläche des gefrorenen/gekühlten Nachspeisengrundmaterialschicht versehen ist.

12. Die Vorrichtung zur Herstellung einer gefrorenen/gekühlten Nachspeise nach Anspruch 9, umfassend ein Kühlelement, das bewirkt, dass der zweite Kühlabschnitt die Oberfläche der gefrorenen/gekühlten Nachspeisengrundmaterialschicht kontaktiert.

## Revendications

1. Dessert surgelé/glacé comprenant, à l'intérieur d'un pot, une couche de matière de base du dessert surgelé/glacé, sur la surface supérieure de laquelle est disposé un motif surélevé et indenté, et une couche de substance à l'état de sol avec une surface plate couvrant le motif surélevé et indenté dans ladite couche de matière de base du dessert surgelé/glacé, dans lequel la substance à l'état de sol est une sauce.

2. Dessert surgelé/glacé selon la revendication 1, dans lequel la matière de base du dessert surgelé/glacé est de la crème glacée, un bâtonnet de glace, de la glace lactée, ou du lait glacé.

3. Dessert surgelé/glacé selon la revendication 1, dans lequel la substance à l'état de sol est préparée par addition d'au moins un élément parmi un épaississant au polysaccharide ou de la gélatine.

4. Dessert surgelé/glacé selon la revendication 1, dans lequel la substance à l'état de sol est préparée sans addition d'au moins un élément parmi un épaississant de polysaccharide ou la gélatine.

5. Méthode de fabrication d'un dessert surgelé/glacé comprenant :
une étape de fourniture de pot pour fournir des pots ;
une étape de remplissage de la matière de base du dessert surgelé/glacé pour remplir la matière de base du dessert surgelé/glacé dans les pots fournis ;
une étape de formation d'un motif surélevé et indenté pour former un motif surélevé et indenté sur la matière de base du dessert surgelé/glacé ;
une étape de remplissage de la substance à l'état de sol pour verser la substance à l'état de sol sur la matière de base du dessert surgelé/glacé dans laquelle est formé un motif surélevé et indenté ;
et en outre une première étape de refroidissement pour fournir un milieu de refroidissement sur la couche de substance à l'état de sol et pour refroidir la matière de base du dessert surgelé/glacé et une substance à l'état de sol ; dans laquelle ladite substance à l'état de sol est une sauce.

6. Méthode de fabrication d'un dessert surgelé/glacé selon la revendication 5, comprenant une étape d'aplatissement entre l'étape de remplissage de la matière de base du dessert surgelé/glacé et l'étape de formation du motif surélevé et indenté, pour aplatir la surface de la matière de base du dessert surgelé/glacé.

7. Méthode de fabrication d'un dessert surgelé/glacé selon la revendication 5, comprenant une seconde étape de refroidissement pour refroidir et durcir la surface de la couche de matière de base du dessert surgelé/glacé avant l'étape de fourniture de la substance à l'état de sol.

8. Méthode de fabrication d'un dessert surgelé/glacé selon la revendication 7, moyennant quoi la seconde étape de refroidissement provoque la mise en contact de l'élément de refroidissement avec la surface de la couche de matière de base du dessert surgelé/glacé.

9. Appareil de fabrication d'un dessert surgelé/glacé, comprenant :
une partie de fourniture d'un pot (20) pour fournir des pots (CB) ;
une partie de remplissage de la matière de base du dessert surgelé/glacé (24) pour remplir la matière de base du dessert surgelé/glacé (AB) dans les pots fournis (CB) ;
une partie de formation d'un motif surélevé et indenté (26, 28) pour former un motif surélevé et indenté sur la matière de base du dessert surgelé/glacé ;
une partie de remplissage de la substance à l'état de sol (34) pour verser la substance à l'état de sol sur la matière de base du dessert surgelé/glacé dans laquelle est formé un motif surélevé et indenté ;
et en outre une première partie de refroidissement pour fournir un milieu de refroidissement sur la couche de substance à l'état de sol et refroidir la matière de base du dessert surgelé/glacé et la substance à l'état de sol; dans lequel ladite substance à l'état de sol est une sauce.

10. Appareil de fabrication d'un dessert surgelé/glacé selon la revendication 9, dans lequel un élément d'aplatissement pour aplatir la surface de la surface de la matière de base du dessert surgelé/glacé est disposé entre la partie de remplissage de la matière de base du dessert surgelé/glacé et la partie de formation du motif surélevé et indenté.

11. Appareil de fabrication d'un dessert surgelé/glacé selon la revendication 9, pourvu en outre d'une seconde partie de refroidissement pour refroidir et durcir la surface de la couche de matière de base du dessert surgelé/glacé.

12. Appareil de fabrication d'un dessert surgelé/glacé selon la revendication 9, comprenant un élément de refroidissement permettant la mise en contact de la seconde partie de refroidissement avec la surface de la couche de matière de base du dessert surgelé/glacé.
